Europäisches Patentamt

European Patent Office

Office européen des brevets

(11) Veröffentlichungsnummer: **0 312 149**
**A1**

## (12) EUROPÄISCHE PATENTANMELDUNG

(21) Anmeldenummer: **88202177.7**

(22) Anmeldetag: **03.10.88**

(51) Int. Cl.⁴: **G02B 6/26 , G02B 5/32**

(30) Priorität: **16.10.87 DE 3735032**

(43) Veröffentlichungstag der Anmeldung:
**19.04.89 Patentblatt 89/16**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT**

(72) Erfinder: **Böhm, Heinz, Dipl.-Phys.**
**Kneippstrasse 2**
**D-8520 Erlangen(DE)**

(74) Vertreter: **Peuckert, Hermann, Dipl.-Ing. et al**
**Philips Patentverwaltung GmbH**
**Wendenstrasse 35 Postfach 10 51 49**
**D-2000 Hamburg 1(DE)**

(54) **Lichtwellenleiter mit Ankopplungsoptik.**

(57) Der Lichtwellenleiter mit Ankopplungsoptik ist so auszugestalten, daß die Ankopplungsoptik möglichst einfach zu erzeugen und auf dem Lichtwellenleiterende aufzubringen ist und daß am Lichtwellenleiterende keine Durchmesserveränderung auftritt.

Hierzu das optisch abbildende Bauelement als Fresnellinse ausgebildet.

Anwendungsgebiet ist die optische Übertragungstechnik.

## Lichtwellenleiter mit Ankopplungsoptik

Die Erfindung betrifft einen Lichtwellenleiter mit einem an einem Ende angebrachten optisch abbildenden Bauelement.

In der europäischen Patentanmeldung 0 194 842 (G 02 B 6/26) ist eine Einrichtung zur Ankopplung eines Lasers an einen Lichtwellenleiter beschrieben, die aus einem konisch geformten Körper besteht, dessen am Lichtwellenleiterende anliegendes Ende etwa den gleichen Durchmesser hat wie der Lichtwellenleiter und dessen anderes Ende aufgeweitet ist, wobei die Oberfläche auf dieser Seite konvex ist und als fokussierende Linse wirkt. Diese Seite empfängt die Strahlung eines Lasers, die dann mittels des Körpers auf den Lichtwellenleiter übertragen wird. Bei dieser Anordnung ist es schwierig, den Lichtwellenleiter und den konisch geformten Körper an seinem Ende auf einfache Weise zuverlässig zu halten, da die Halterung entsprechend der Form des konischen Körpers ausgestaltet sein muß. Außerdem beansprucht diese Einrichtung ziemlich viel Raum.

Der Erfindung liegt die Aufgabe zugrunde, einen Lichtwellenleiter mit einer Ankopplungsoptik so auszugestalten, daß die Ankopplungsoptik möglichst einfach zu erzeugen und auf dem Lichtwellenleiterende aufzubringen ist und daß am Lichtwellenleiterende keine Durchmesserveränderung auftritt, so daß eine einfach herzustellende Halterung benutzt werden kann. Außerdem soll die Anordnung möglichst geringen Raumbedarf haben.

Diese Aufgabe wird gemäß der Erfindung dadurch gelöst, daß das optisch abbildende Bauelement eine Fresnellinse ist. Vorteilhafte Weiterbildungen der Erfindung sind in den Unteransprüchen angegeben.

Anhand des in der Figur schematisch dargestellten Ausführungsbeispiels sollen die Erfindung und ihre Ausgestaltungen näher beschrieben und erläutert werden.

Die Fig. zeigt in schematischer und unmaßstäblicher Darstellung eine Montageanordnung zur Befestigung eines Fresnellinsenplättchens auf der Endfläche eines Lichtwellenleiters

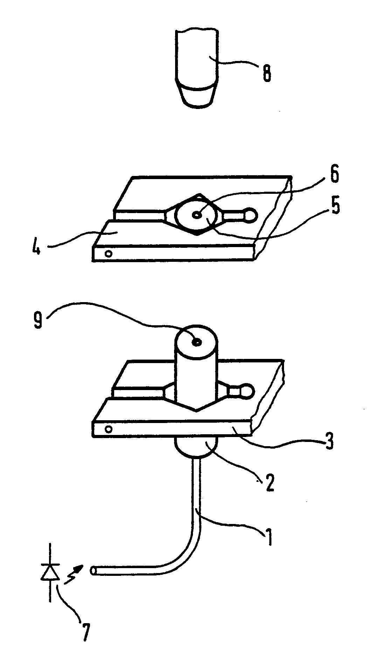

Das Ende eines Lichtwellenleiters 1 ist in einer Hülse 2 konzentrisch gehalten. Die Hülse kann z.B. aus Metall gefertigt sein, wie dies von üblichen Steckverbinderstiften der optischen Verbindungstechnik her bekannt ist. Die Befestigung des Lichtwellenleiters in der Hülse erfolgt z.B. durch Kleben. Nach dem Einkleben des Lichtwellenleiterendes in die Hülse wird die Endfläche 9 plangeschliffen und poliert, so daß die Endfläche 9 des Lichtwellenleiters 1 mit der ringförmigen Endfläche des Hülsenendes eine Ebene bildet und diese Ebene quer zur Hülsenachse verläuft. Die Hülse ist in einer in Fig. 1 im Einzelnen nicht näher dargestellten Montageeinrichtung in einem Klemmhalter 3 eingeklemmt. Der Klemmhalter 3 ist mittels in der Figur nicht näher dargestellter Einstellmittel in seiner Position gegenüber einem zweiten ortsfesten Klemmhalter 4 nach allen Richtungen verstellbar. Die Einstellmittel sind übliche Mikromanipulatoren, die elektromotorisch angetrieben sind und eine sehr genaue Bewegung des Klemmhalters 3 gestatten.

Der in der Montageeinrichtung fest eingebaute weitere Klemmhalter 4 hält eine runde Trägerscheibe 5, in deren Mitte ein Fresnellinsenplättchen 6 befestigt ist. Ein solches Fresnellinsenplättchen kann als Pressteil erzeugt werden. Eine andere Möglichkeit besteht darin, daß zunächst durch Abscheidung von Schichten mit unterschiedlichem Brechungsindex ein Stab etwa entsprechend einer Lichtwellenleiter-Vorform erzeugt wird, dessen Brechungsindexverlauf von innen nach außen einer Fresnelstruktur entspricht. Sodann wird dieser Stab in eine Halterung eingebettet, z.B. eine Hülse, und es werden durch Schnitte quer zur Achse Einzelscheiben abgesägt, welche anschließend auf beiden Seiten geschliffen und poliert werden. Für den vorliegenden Anwendungsfall ist es besonders vorteilhaft, eine Hülse mit einem solchen Querschnitt zu wählen, der dem Durchmesser der für die Halterung des Lichtwellenleiters 1 benutzten Hülse 2 entspricht. Der Durchmesser der Fresnellinse beträgt etwa 125 Mikrometer und entspricht damit dem Durchmesser gebräuchlicher Lichtwellenleiter. Der Hülsenring dient als Träger für das Fresnellinsenplättchen. Die Dicke der Linse ist abhängig von der numerischen Apertur des an das Lichtwellenleiterende anzukoppelnden Lasers sowie abhängig vom verwendeten Lichtwellenleitertyp. Sie kann bis zu 5 mm dick sein.

Der Klemmhalter 3 mit der Hülse 2 mit dem Lichtwellenleiterende und der Klemmhalter 4 mit dem Träger, in dem das Fresnellinsenplättchen eingebettet ist, sind in der Montageanordnung derart angeordnet, daß bereits eine möglichst gute Übereinstimmung der Achsen der Fresnellinse und des Lichtwellenleiters besteht. Die Endfläche 9 des Lichtwellenleiters und die Flächen der Fresnellinse 6 sind einander parallel.

Am anderen Ende des Lichtwellenleiters 1 wird z.B. von der Laserdiode 7 Licht eingestrahlt. Dabei wird Licht mit der Wellenlänge 1300 nm bevorzugt, weil Licht dieser Wellenlänge auch im praktischen Betrieb des Lichtwellenleiters verwendet wird. Über das Okular 8 eines nicht weiter dargestellten Mikroskops kann das aus der Endfläche 9 des Lichtwellenleiters 1 auf die Fresnellinse fallende Licht beobachtet werden. Hierzu verwendet man zweckmäßig eine Videokamera, so daß die Abbildung auf dem Bildschirm eines Monitors betrachtet werden kann.

Zur Befestigung der Fresnellinse an der Endfläche des Lichtwellenleiters 1 wird diese Endfläche 9 mit einem indexangepaßten Kleber benetzt, sodann wird mittels der Mikromanipulatoren der Klemmhalter 3 mit dem in der Hülse 2 befestigten Lichtwellenleiterende 9 in Richtung zur Fresnellinse 6 bewegt und so eingestellt, daß die Achsen von Fresnellinse 6 und Lichtwellenleiter 1 bei Berührung beider Teile exakt übereinstimmen. Mittels UV-Strahlung wird sodann der Kleber ausgehärtet. · Die Endfläche des Lichtwellenleiters ist auf diese sehr einfache Weise mit einer nur geringen Raum beanspruchenden Ankopplungsoptik versehen. Eine Fresnellinse reicht für diese Anwendungszwecke aus, da es nicht auf eine exakte optische Abbildung ankommt, sondern lediglich eine Fokussierung des Wellenfeldes erreicht werden soll.

Eine bevorzugte Ausführungsform besteht darin, daß sowohl die Lichtwellenleiterendfläche 9 als auch die Oberflächen der Fresnellinse 6 mit einem Antireflexbelag beschichtet sind. Vor dem Zusammenfügen der beiden Teile wird die Endfläche 9 nicht wie bei dem vorbeschriebenen Verfahren mit dem Kleber benetzt, vielmehr werden zunächst die beiden Teile, also die Hülse 2 mit dem Lichtwellenleiter 1 sowie die im Träger gehaltene Fresnellinse 6 zusammenge führt und sodann wird der Träger 5 der Fresnellinse 6 mit der Hülse 2 verklebt. Auf diese Weise bleibt die Kontaktfläche zwischen Fresnellinse und Lichtwellenleiterendfläche frei von Kleber, wodurch die optischen Eigenschaften verbessert werden.

Eine weiter verbesserte Ausführungsform eines Lichtwellenleiters mit Abbildungsoptik am Lichtwellenleiterende besteht darin, daß die Fresnellinse durch eine auf der Endfläche des Lichtwellenleiters fotochemisch gebildete Struktur gebildet ist. Zur Herstellung dieser Ausführungsform wird der Lichtwellenleiter mit seinem Ende ebenfalls in einer Hülse gehaltert, z.B. eingeklebt, und die Endfläche des Lichtwellenleiters wird abgeschliffen und poliert. Auf diese Endfläche wird sodann eine lichtempfindliche Schicht aufgetragen, z.B. eine Fotoemulsion. Diese Schicht muß sehr gleichmäßig sein, außerdem wird eine sehr hoch auflösende Fotoemulsion verwendet. Diese Schicht wird mit zwei kohärenten Lichtstrahlen bestrahlt, welche einen Gangunterschied aufweisen. Zu diesem Zweck kann ein von einem Laser stammender Lichtstrahl über einen Strahlteiler und eine Abbildungsoptik direkt auf die Oberfläche des Lichtwellenleiters mit der lichtempfindlichen Schicht geführt werden. Ein vom Strahlteiler abgelenkter Teil des vom Laser kommenden Lichtstrahls wird über einen Umweg geführt und gelangt z.B. über einen Spiegel ebenfalls auf die lichtempfindliche Schicht. Infolge des Gangunterschiedes zwischen den beiden Lichtstrahlen werden Interferenzen hervorgerufen, welche auf der lichtempfindlichen Schicht die gewünschte Fresnellinsenstruktur erzeugen.

Nach dem Belichten wird die lichtempfindliche Schicht in üblicher Weise behandelt, so daß lediglich die Fresnellinsenringestruktur auf der Lichtwellenleiterendfläche stehen bleibt. Ein hierfür anwendbarer fotochemischer Prozeß ist beispielsweise in Applied Optics Vol. 25 No. 2, S. 372 bis 376 beschrieben. Auf die Oberfläche wird noch eine Antireflex-Schicht aufgetragen.

Eine andere Möglichkeit besteht darin, auf die Fotoschicht, z.B. mit einem Dia, die Fresnellinsenstruktur unmittelbar abzubilden.

Die Erzeugung einer Fresnellinse auf der Endfläche eines Lichtwellenleiters auf fotochemischen Wege erfordert den geringsten mechanischen Aufwand, insbesondere ist es nicht nötig, gesondert ein Fresnellinsenplättchen zu erzeugen und diese auf der Endfläche eines Lichtwellenleiters anzubringen, wozu noch Justiermittel erforderlich sind.

## Ansprüche

1. Lichtwellenleiter mit einem an einem Ende angebrachten optisch abbildenden Bauelement, dadurch gekennzeichnet, daß das optisch abbildende Bauelement eine Fresnellinse (6) ist.

2. Lichtwellenleiter nach Anspruch 1, dadurch gekennzeichnet, daß die Fresnellinse (6) auf der Endfläche (9) des Lichtwellenleiters (1) aufgeklebt ist.

3. Lichtwellenleiter nach Anspruch 1, dadurch gekennzeichnet, daß das Lichtwellenleiterende in einer Hülse (2) befestigt und die Fresnellinse (6) in einem Träger (5) gehalten ist und daß Träger (5) und Hülse (2) aneinander befestigt sind.

4. Lichtwellenleiter nach einem der Ansprüche 2 oder 3, dadurch gekennzeichnet, daß die Endfläche (9) des Lichtwellenleiters (1) und die Oberfläche der Fresnellinse (5) mit einem Antireflexbelag beschichtet sind.

5. Lichtwellenleiter nach Anspruch 1, dadurch gekennzeichnet, daß die Fresnellinse durch eine auf der Endfläche (9) des Lichtwellenleiters fotochemisch erzeugte Struktur gebildet ist.

6. Verfahren zur Herstellung eines Lichtwellenleiters mit einem an einem Ende angebrachten optisch abbildenden Bauelement nach Anspruch 5, dadurch gekennzeichnet, daß die Endfläohe (9) des Lichtwellenleiters (1) mit einer lichtempfindlichen Schicht (11) versehen wird und auf dieser Schicht (11) die Struktur einer Fresnellinse erzeugt wird.

7. Verfahren nach Anspruch 6, dadurch gekennzeichnet, daß diese Schicht (14) auf der Endfläche des Lichtwellenleiters (1) holografisch mittels kohärenter Lichtstrahlen (11, 12) belichtet und die Fresnellinsenstruktur als Interferenzbild erzeugt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 11, Nr. 256 (P-607)[2703], 20. August 1987; & JP-A-62 62 306 (ALPS ELECTRIC CO., LTD) 19-03-1987 * Insgesamt * --- | 1 | G 02 B 6/26 G 02 B 5/32 |
| X | RESEARCH DISCLOSURE, Nr. 276, April 1987, Nr. 27685, Seiten 247-248, New York, US; "Light emitting diode - light guide system" * Insgesamt * --- | 1 | |
| A | PATENT ABSTRACTS OF JAPAN, Band 4, Nr. 138 (P-29)[620], 27. September 1980; & JP-A-55 88 011 (FUJITSU K.K.) 03-07-1980 * Insgesamt * --- | 1,3 | |
| A | EP-A-0 223 282 (N.V. PHILIPS) * Figuren 1a,1b; Spalte 3, Zeilen 16-19 * --- | 1,4 | |
| Y | APPLIED OPTICS, Band 13, Nr. 1, Januar 1974, Seiten 89-94, American Institute of Physics, New York, US; L.G. COHEN et al.: "Microlenses for coupling junction lasers to optical fibers" * Figuren 2,4; Seite 90, Zeilen 1-44; Seite 91, Zeilen 1-28 * | 6 | RECHERCHIERTE SACHGEBIETE (Int. Cl.4) G 02 B 6/00 G 02 B 5/32 |
| A | IDEM --- -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 23-01-1989 | MATHYSSEK K. |

EPO FORM 1503 03.82 (P0403)

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | F. LABUHN et al.: "New techniques in space astronomy", 1971, Seiten 207-210, D. REIDEL Publishing Co., Dordrecht, NL * Figuren 1,3; Seite 207, Zeilen 1-34; Seite 208, Zeilen 1-4; Seite 209, Zeilen 1-7 * | 6 | |
| A | IDEM --- | 7 | |
| A | DE-A-2 147 841 (SIEMENS) * Figuren 1,2,5; Spalte 5, Zeilen 16-68; Spalte 6, Zeile 13; Spalte 7, Zeilen 15-23; Spalte 8, Zeilen 1-6 * ----- | 6,7 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 23-01-1989 | MATHYSSEK K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..............................................................................................
& : Mitglied der gleichen Patentfamilie, übereinstimmendes Dokument

EPO FORM 1503 03.82 (P0403)